(19) Europäisches Patentamt
European Patent Office
Office européen des brevets

(11) EP 0 870 801 A1

(12) EUROPEAN PATENT APPLICATION
published in accordance with Art. 158(3) EPC

(43) Date of publication:
**14.10.1998 Bulletin 1998/42**

(21) Application number: **97940348.2**

(22) Date of filing: **11.09.1997**

(51) Int. Cl.$^6$: **C08L 23/02**, C08L 25/08, C08K 5/10

(86) International application number:
**PCT/JP97/03209**

(87) International publication number:
**WO 98/12252 (26.03.1998 Gazette 1998/12)**

(84) Designated Contracting States:
**DE FR GB IT NL**

(30) Priority: **18.09.1996 JP 246249/96**

(71) Applicant:
**Mitsui Chemicals, Inc.**
**Tokyo 100 (JP)**

(72) Inventors:
- **OKADA, Keiji**
  **Mitsui Chemicals, Inc.**
  **Kuga-gun Yamaguchi 740 (JP)**
- **TAKIMOTO, Kazuyuki**
  **Mitsui Chemicals, Inc.**
  **Kuga-gun Yamaguchi 740 (JP)**
- **MATSUMOTO, Tetsuhiro**
  **Mitsui Chemicals, Inc.**
  **Kuga-gun Yamaguchi 740 (JP)**
- **MORIZONO, Ken-ichi**
  **Mitsui Chemicals, Inc.**
  **Kuga-gun Yamaguchi 740 (JP)**

(74) Representative:
**Cresswell, Thomas Anthony**
**J.A. KEMP & CO.**
**14 South Square**
**Gray's Inn**
**London WC1R 5LX (GB)**

# (54) ALPHA-OLEFIN/AROMATIC VINYL COPOLYMER COMPOSITION AND MOLDINGS THEREOF

(57) The present invention provides a composition containing an α-olefin/aromatic vinyl compound copolymer, which has no chlorine content and can bring about formed products, such as films, sheets, pipes and tubes, exhibiting a moderate extensible elasticity and ability for adhering onto various surfaces together with superior properties in the transparency, fogging resistance, durablility of the fogging resistance and ability for restoring from strain. The composition comprises

99.5 - 90 weight % of a copolymer (A) of an α-olefin and an aromatic vinyl compound, the copolymer (A) being composed of 99.95 - 70 mole % of the structural unit derived from the α-olefin and 0.05 - 30 mole % of the structural unit derived from the aromatic vinyl compound and
0.5 - 10 weight % of an anti-fogging agent (B).

EP 0 870 801 A1

## Description

### FIELD OF THE TECHNIQUE

The present invention relates to a composition of an α-olefin/aromatic vinyl compound copolymer to be used favorably for producing formed products, such as films, sheets, pipes and tubes, as well as to formed products produced from such composition and, more specifically, to a composition of an α-olefin/aromatic vinyl compound copolymer which can afford to bring about formed products exhibiting a fogging-resistant property, especially a durable fogging resistance, and to such formed products.

### BACKGROUND OF THE TECHNIQUE

For films, sheets, pipes and tubes to be used for agricultural, industrial, medical and other purposes, they are requested to exhibit an adequate extensible elasticity and ability for adhering onto various surfaces together with better transparency and some tough consistency and, in addition, it is required that the inside faces of such films, sheets, pipes and tubes should not suffer from fogging (fogging resistance) and such a fogging resistance should be preserved for a long term (durable fogging resistance).

In the past, polymeric materials based on polyvinyl chloride have been employed for such films, sheets, pipes and tubes. While the polymeric materials based on polyvinyl chloride have many superior performances, materials having no chlorine content have recently become required in view of the environmental protection.

Although films, sheets, pipes and tubes made of a linear low density copolymer resin based on ethylene/α-olefin have been known, they are requested to be further improved in the extensible elasticity, ability for adhering on surfaces and fogging resistance.

The inventors had made investigations as to films, sheets, pipes and tubes produced from resins based on polyolefin which have no chlorine content and exhibit material properties comparable to those of conventional resins based on polyvinyl chloride, whereby they reached a discovery that films, sheets, pipes and tubes superior in the transparency with balanced material properties can be obtained by using a composition containing a copolymer of α-olefin/aromatic vinyl compound, which has led to the present invention.

One object of the present invention is to provide a composition of an α-olefin/aromatic vinyl compound copolymer which can afford to bring about formed products exhibiting balanced material properties, such as an adequate extensible elasticity and ability for adhering onto various surfaces, with superiorities in the transparency, in the fogging resistance, in the durability of the fogging resistance and in the ability for restoring from strain (strain restorability).

Another object of the present invention is to provide a formed product, such as a film, sheet, pipe or tube, produced from the above-mentioned composition exhibiting balanced material properties, such as an adequate extensible elasticity and ability for adhering onto various surfaces and being superior in the transparency, fogging resistance, durablility of the fogging resistance and strain restorability.

### DISCLOSURE OF THE INVENTION

The composition containing an α-olefin/aromatic vinyl compound copolymer according to the present invention comprises

(A) a copolymer of an α-olefin and an aromatic vinyl compound composed of 99.95 - 70 mole % of the structural unit derived from the α-olefin and 0.05 - 30 mole % of the structural unit derived from the aromatic vinyl compound and
(B) an anti-fogging agent,
wherein the content of the anti-fogging agent (B) is in the range from 0.5 to 10 parts by weight per 100 parts by weight of the α-olefin/aromatic vinyl compound copolymer (A).

The formed products according to the present invention include films, sheets, pipes and tubes which are produced from the above-defined composition containing the α-olefin/aromatic vinyl compound copolymer (A).

The α-olefin/aromatic vinyl compound copolymer (A) to be employed according to the present invention is a copolymer of an α-olefin and an aromatic vinyl compound and contains 99.95 - 70 mole %, preferably 99.95 - 85 mole %, more preferably 99.95 - 93 mole % of the structural unit derived from the α-olefin and 0.05 - 30 mole %, preferably 0.05 - 15 mole %, more preferably 0.05 - 7 mole % of the structural unit derived from the aromatic vinyl compound.

For the α-olefin, there may be exemplified those having 2 - 20 carbon atoms, such as, ethylene, propylene, 1-butene, 1-pentene, 1-hexene, 4-methyl-1-pentene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene

and 1-eicosene. They may be used either alone or in combination of two or more of them.

For the aromatic vinyl compound, there may be exemplified styrene; mono- and polyalkylstyrenes, such as, o-methylstyrene, m-methylstyrene, p-methylstyrene, o,p-dimethylstyrene, o-ethylstyrene, m-ethylstyrene and p-ethylstyrene; functional group-containing derivatives of styrene, such as, methoxystyrene, ethoxystyrene, vinyl benzoate, methyl vinyl benzoate, vinyl benzyl acetate, hydroxystyrene, o-chlorostyrene, p-chlorostyrene and divinylbenzene; and others including 3-phenylpropylene, 4-phenylbutene and α-methylstyrene. Among these, styrene and methoxystyrene are preferred. The aromatic vinyl compound can be employed alone or in a combination of two or more thereof.

For the α-olefin/aromatic vinyl compound copolymer (A) to be employed according to the present invention, a copolymer of ethylene and an aromatic vinyl compound and a copolymer of ethylene, an α-olefin having 3 - 20 carbon atoms and an aromatic vinyl compound are preferred.

For the copolymer of ethylene, an α-olefin having 3 - 20 carbon atoms and an aromatic vinyl compound, those composed of 99.95 - 40 mole % of the structural unit derived from ethylene, 0 - 30 mole % of the structural unit derived from the α-olefin having 3 - 20 carbon atoms (wherein the total of these two structural units in the copolymer amounts to 99.95 - 70 mole %) and 0.05 - 30 mole % of the aromatic vinyl compound, preferably those composed of 99.95 - 65 mole % of the structural unit derived from ethylene, 0 - 20 mole % of the structural unit derived from the α-olefin having 3 - 20 carbon atoms (wherein the total of these two component structural units in the copolymer amounts to 99.95 - 85 mole %) and 0.05 - 15 mole % of the structural unit derived from the aromatic vinyl compound, more preferably those composed of 99.90 - 83 mole % of the structural unit derived from ethylene, 0.05 - 10 mole % of the structural unit derived from the α-olefin having 3 - 20 carbon atoms (wherein the total of these two structural units in the copolymer amounts to 99.95 - 93 mole %) and 0.05 - 7 mole % of the structural unit derived from the aromatic vinyl compound, especially preferably those composed of 99.90 - 92.6 mole % of the structural unit derived from ethylene, 0.05 - 6 mole % of the structural unit derived from an α-olefin having 3 - 20 carbon atoms (wherein the sum of these two amounts to 99.95 - 98.6 mole %) and 0.05 - 1.4 mole % of the structural unit derived from the aromatic vinyl compound are favorable in view of the balance between the transparency, heat resistance, rigidity, low temperature flexibility and shock resistance of the formed product produced from the composition.

Among the above-mentioned copolymers, those in which the total of the structural unit derived from the α-olefin having 3 - 20 carbon atoms and the structural unit derived from the aromatic vinyl compound amounts to 0.05 - 30 mole %, preferably 0.05 - 20 mole %, more preferably 0.05 - 10 mole %, especially preferably 0.05 - 6.5 mole % are favorable in respect to the balance between the transparency, rigidity, low temperature flexibility and shock resistance as well as to the hygienic safety and scarce coloration of the formed product.

For the α-olefin having 3 - 20 carbon atoms in the copolymer of ethylene/$C_3$-$C_{20}$ α-olefin/aromatic vinyl compound, 1-butene, 1-pentene, 1-hexene and 1-octene are preferred and, for the aromatic vinyl compound, styrene and 4-methoxystyrene are preferred.

For the α-olefin/aromatic vinyl compound copolymer (A) to be employed according to the present invention, it is favorable that the melt flow rate (MFR) at 190°C under a load of 2.16 kg is in the range from 0.05 to 100 g/10 min., preferably in the range from 0.1 to 50 g/10 min., in view of the formability of the composition and rigidity and shock resistance of the formed product. It is further favorable that the temperature (Tm) at the maximum peak in the endothermic curve obtained using a differential scanning calorimeter is in the range from 70 to 125°C, preferably in the range from 85 to 110°C, whereby a formed product, such as film, sheet, pipe or tube, exhibiting balanced properties between the rigidity, toughness, transparency and heat resistance can be obtained.

For the α-olefin/aromatic vinyl compound copolymer (A) to be used according to the present invention, it is furthermore favorable that the proportion of the structural unit building up a chain structure in which at least two structural units derived from the aromatic vinyl compound are chained in succession (which is denoted hereinafter sometimes as the "aromatic vinyl compound-aromatic vinyl compound chained structure") is 1 mole % or less, preferably 0.1 mole % or less, based on the total moles of the structural unit derived from the aromatic vinyl compound. Here, the proportion of the aromatic vinyl compound-aromatic vinyl compound chained structure is determined by $^{13}$C-NMR.

In case the α-olefin/aromatic vinyl compound copolymer (A) to be used according to the present invention is an ethylene/aromatic vinyl compound copolymer, those in which the B-value determined by $^{13}$C-NMR spectrum using the equation given below is in the range of 0.90 - 2.00, preferably 0.95 - 1.50, more preferably 1.00 - 1.45, especially 1.02 - 1.40, are favorable:

$$B = [P_{SE}]/\{2 \cdot [P_E] \cdot [P_S]\}$$

in which $[P_E]$ represents the molar fraction of the structural unit derived from ethylene in the ethylene/aromatic vinyl compound copolymer, $[P_S]$ denotes the molar fraction of the structural unit derived from the aromatic vinyl compound in the ethylene/aromatic vinyl compound copolymer and $[P_{SE}]$ represents the proportion of number of aromatic vinyl compound-ethylene chains to the total number of dyad chains in the ethylene/aromatic vinyl compound copolymer.

The B-value calculated by the above equation is a parameter indicating the state of distribution of ethylene and the

aromatic vinyl compound in the copolymer and can be determined by the method reported by J.C. Randall in "Macromolecules", 15, 353 (1982) or by J. Ray in "Macromolecules", 10, 773 (1977).

The greater the B-value, the shorter will be the block chains of ethylene and of the aromatic vinyl compound, indicating that the distribution of ethylene and of the aromatic vinyl compound in the copolymer is uniform. The lower the B-value than 1.00, the lesser is the uniformity of the molecular distribution of the ethylene/aromatic vinyl compound copolymer, indicating that the length of block-wise chain becomes longer.

The $\alpha$-olefin/aromatic vinyl compound copolymer (A) according to the present invention may further include other comonomer component(s) than the $\alpha$-olefin and the aromatic vinyl compound. For such other comonomer component, there may be enumerated, for example, 1,4-pentadiene, 1,4-hexadiene, 4-methyl-1,5-heptadiene, 5-methylene-2-norbornene, 5-ethylidene-2-norbornene, 5-isopropenyl-2-norbornene, 2,5-norbornadiene, 1,6-cyclooctadiene, 2-ethylene-2,5-norbornadiene, 2-isopropenyl-2,5-norbornadiene, dicyclopentadiene, 1,6-octadiene, 1,7-octadiene and tricyclopentadiene as well as non-conjugated dienes, such as esters of dihydrodicyclopentadienyl oxyethylene with unsaturated carboxylic acids, such as acrylic acid, methacrylic acid, itaconic acid, maleic acid and fumaric acid. They may be used either alone or in a combination of two or more of them.

The anti-fogging agent (B) to be used according to the present invention is an agent for preventing fogging over the inner surface of the formed product, such as film, sheet, pipe or tube, due to condensation of the atmospheric moisture on the surface. There is no restriction for the anti-fogging agent, so long as a hygroscopic function to spread the condensed dew is revealed by making the product surface hydrophilic and, thus, those commonly used as anti-fogging agent may be used as such.

For the anti-fogging agent (B), various surface active agents can be used. Such a surfactant may be of non-ionic, anionic or cationic nature, while non-ionic surfactant is preferred. The surfactant may be used alone or in a combination of two or more thereof.

The surfactant to be used as the anti-fogging agent may preferably have an HLB (hydrophile-lipophile balance) in the range of 5 -10, especially 6 - 9, though those having HLB of other range may also be used. It is preferable for non-ionic surfactant to use two or more surfactants together. In case two or more non-ionic surfactants are used, it is preferable that the HLB value as the mixture is in the above-indicated range. For a mixture of two or more surfactants, they may have each an HLB outside the above-indicated range, so long as the "average" HLB as the mixture is in the above range.

Calculation of HLB is carried out in accordance with each of the equations given below.

1) For a fatty acid ester of a polyhydric alcohol:

$$HLB = 20[1 - (S/A)]$$

in which S = the saponification number of the ester and
A = the neutralization number of the fatty acid.

2) For the polyhydric alcohols (such as glycol, glycerin, solbite and mannite), tall oil, pine oil, beeswax and lanolin:

$$HLB = (E + P)/5$$

in which E = the oxyethylene content (wt. %) in the molecule and
P = the polyhydric alcohol content (wt. %) in the molecule.

3) For the case where the hydrophilic group is only oxyethylene:

$$HLB = E/5$$

in which E = the oxyethylene content (wt. %) in the molecule.

4) For mixtures:

$$HLB = [\{Wa \times HLB(a)\} + \{Wb \times HLB(b)]/(Wa + Wb)$$

in which HLB(a) = the HLB value for the surfactant (a),
HLB(b) = the HLB value for the surfactant (b),
Wa = weight fraction of the surfactant (a) and
Wb = weight fraction of the surfactant (b).

Though not restrictive, the followings are concrete examples of the non-ionic surfactant to be used as the anti-fogging agent (B), in which the number given in the parentheses is the HLB value for each surfactant:

Sorbitan fatty acid esters, such as sorbitan monooleate (4.3), sorbitan monolaurate (8.6), sorbitan monostearate (4.7), sorbitan monopalmitate (6.7) and sorbitan sesquioleate (3.7); glycerin fatty acid esters, such as glycerin monooleate (4.2) and glycerin monostearate (4.1); polyglycerin fatty acid esters, such as diglycerin monooleate (6.9), diglycerin sesquilaurate (6.3), diglycerin sesquioleate (5.4), tetraglycerin monooleate (10.3), tetraglycerin monostearate (10.2), hexaglycerin monolaurate (13.8), hexaglycerin monooleate (12.2), decaglycerin monooleate (14.5) and decaglycerin monolaurate (15.7); polyoxyalkylene ethers, such as polyoxyethylene(n=4) lauryl ether (9.5) and polyoxyethylene(n=5) lauryl ether (10.8); fatty acid amines, such as lauryl diethanolamine (6.4); and fatty acid amides, such as oleic acid amide.

They may be used alone or in combination of two or more of them.

In the composition according to the present invention, the proportion of the anti-fogging agent (B) may be in the range from 0.5 to 10, preferably from 0.5 to 8, more preferably from 1 to 5 parts by weight per 100 parts by weight of the $\alpha$-olefin/aromatic vinyl compound copolymer (A). When the proportion of the anti-fogging agent (B) is in the above range, a fogging preventive effect is attained and molded products exhibiting no bleeding of the anti-fogging agent from the product surface and superior in the transparency and in the preservativity of fogging preventive effect together with superior physical properties and heat resistance can be produced from the composition.

Now, the description is directed to the manner for preparing the $\alpha$-olefin/aromatic vinyl compound copolymer (A).

The $\alpha$-olefin/aromatic vinyl compound copolymer (A) to be employed according to the present invention can be produced by, for example, co-polymerizing an $\alpha$-olefin with an aromatic vinyl compound in the presence of a metallocene catalyst (a).

As the metallocene catalyst (a), those based on metallocene used hitherto as single site catalyst and ones simillar to them may be used without any restriction, wherein, however, special preference is given to catalysts composed of a metallocene of a transition metal (referred to as a transition metal compound) (b), an organic aluminum oxy-compound (c) and/or an ionized ionic compound (d).

For the metallocene (b), those of transition metals selected from Group 4 of the periodic table of elements with 18 Groups (long form) according to the Revised IUPAC Inorganic Nomenclature (1989) and, concretely, those expressed by the following general formula (1)

$$ML_x \qquad (1)$$

may be enumerated, in which M denotes a metal selected from the Group 4 of the periodic table, namely, zirconium, titanium or hafnium, x is the valence of the transition metal and L represents a ligand coordinating to the transition metal, wherein at least one of the ligands has a cyclopentadienyl skeleton. This ligand L having the cyclopentadienyl skeleton may have one or more substituent groups.

Concrete examples of the ligand having the cyclopentadienyl skeleton include such groups as alkyl-or cycloalkyl-substituted cyclopentadienyl, such as, cyclopentadienyl, methylcyclopentadienyl, ethylcyclopentadienyl, n- or i-propylcyclopentadienyl, n-, i-, sec- or tert-butylcyclopentadienyl, hexylcyclopentadienyl, octylcyclopentadienyl, dimethylcyclopentadienyl, trimethylcyclopentadienyl, tetramethylcyclopentadienyl, pentamethylcyclopentadienyl, methylethylcyclopentadienyl, methylpropylcyclopentadienyl, methylbutylcyclopentadienyl, methylhexylcyclopentadienyl, methylbenzylcyclopentadienyl, ethylbutylcyclopentadienyl, ethylhexylcyclopentadienyl and methylcyclohexylcyclopentadienyl; and others, such as indenyl, 4,5,6,7-tetrahydroindenyl and fluorenyl.

These ligand groups may further be substituted by, for example, halogen atom(s) and trialkylsilyl group(s).

Among them, alkyl-substituted cyclopentadienyls are especially preferred.

In case where the metallocene (b) represented by the general formula (1) has two or more ligand groups L having the cyclopentadienyl skeleton, two of these ligand groups having the cyclopentadienyl skeleton may be bound together through a bridging group, for example, an alkylene, such as ethylene or propylene; a substituted alkylene, such as isopropylidene or diphenylmethylene; silylene or a substituted silylene, such as dimethylsilylene, diphenylsilylene or methylphenylsilylene.

For other ligand group L than those having the cyclopentadienyl skeleton, there may be enumerated, for example, hydrocarbon groups, alkoxy groups, aryloxy groups and sulfo-containing groups ($-SO_3R^1$, in which $R^1$ denotes an alkyl, a halogen-substituted alkyl, an aryl or a halogen- or alkyl-substituted aryl) having 1 - 12 carbon atoms, as well as halogen atoms and hydrogen atom.

As the hydrocarbon groups having 1 - 12 carbon atoms, there may be enumerated such groups as alkyl, cycloalkyl, aryl and aralkyl and, more concretely, alkyl groups, such as methyl, ethyl, n-propyl, isopropyl, n-butyl, isobutyl, sec-butyl, tert-butyl, pentyl, hexyl, octyl, decyl and dodecyl; cycloalkyl groups, such as cyclopentyl and cyclohexyl; aryl groups, such as phenyl and tolyl; and aralkyl groups, such as benzyl and neophyl.

As the alkoxy group, there may be enumerated, for example, methoxy, ethoxy, n-propoxy, isopropoxy, n-butoxy, isobutoxy, sec-butoxy, tert-butoxy, pentoxy, hexoxy and octoxy.

As the aryloxy group, for example, phenoxy may be enumerated.

As the sulfo-containing group ($-SO_3R^1$), there may be enumerated, for example, methanesulfonato, p-toluenesulfonato, trifluoromethanesulfonato and p-chlorobenzenesulfonato.

As the halogen atom, fluorine, chlorine, bromine and iodine are exemplified.

When the transition metal of the metallocene (b) represented by the general formula (1) has a valency of 4, it may be represented more concretely by the general formula (2):

$$R^2_kR^3_lR^4_mR^5_nM \qquad (2)$$

in which M is a transition metal same as that given in the genral formula (1), preferably zirconium or titanium, $R^2$ represents a group (ligand) having a cyclopentadienyl skeleton, $R^3$, $R^4$ and $R^5$ represent each, independently of each other, a group having a cyclopentadienyl skeleton or that which is given in the general formula (1) as the ligand L other than that having a cyclopentadienyl skeleton and k is an integer of 1 or higher, wherein $k + l + m + n = 4$.

Examples of the metallocene (b) which contains at least two ligands having each a cyclopentadienyl skeleton and in which M is zirconium are given below:

Bis(cyclopentadienyl)zirconium monochloride monohydride,
bis(cyclopentadienyl)zirconium dichloride,
bis(cyclopentadienyl)methylzirconium monochloride,
bis(cyclopentadienyl)zirconium phenoxymonochloride,
bis(methylcyclopentadienyl)zirconium dichloride,
bis(ethylcyclopentadienyl)zirconium dichloride,
bis(n-propylcyclopentadienyl)zirconium dichloride,
bis(isopropylcyclopentadienyl)zirconium dichloride,
bis(cyclopentadienyl)zirconium bis(methanesulfonate),
bis(cyclopentadienyl)zirconium bis(p-toluenesulfonate),
bis(1,3-dimethylcyclopentadienyl)zirconium dichloride,
bis(1-methyl-3-ethylcyclopentadienyl)zirconium dichloride and
bis(1-methyl-3-propylcyclopentadienyl)zirconium dichloride.

According to the present invention, it is also possible to use a metallocene (b) in which the 1,3-substituted cyclopentadienyl as given above is replaced by a corresponding 1,2-substituted cyclopentadienyl.

There may also be exemplified metallocenes of bridged structure in which at least two of the ligands $R^2$, $R^3$, $R^4$ and $R^5$, for example, $R^2$ and $R^3$ are the group having a cyclopentadienyl skeleton and such at least two groups are bound each other through a bridging group, such as alkylene, substituted alkylene, silylene or substituted silylene. In this case, the groups $R^4$ and $R^5$ stand, independently of each other, for the ligand L other than that having a cyclpentadienyl skeleton as given in the general formula (1).

As the metallocene of such a bridged structure, there may be enumerated, for example, ethylenebis(indenyl)dimethylzirconium, ethylenebis(indenyl)zirconium dichloride and ethylenebis(indenyl)zirconium-bis(trifluoromethane sulfonate).

According to the present invention, it is also possible to use as the metallocene (b) a metallocene represented by the general formula (3):

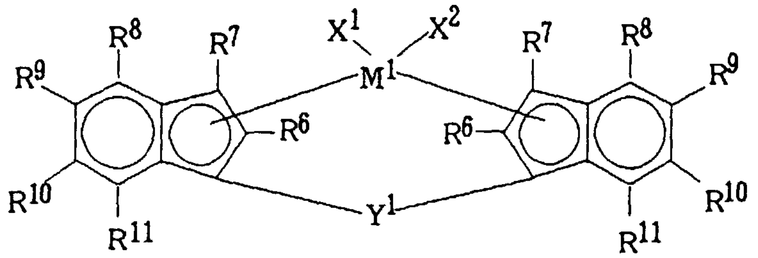

.... (3)

In the general formula (3), $M^1$ represents a transition metal of Group 4, 5 or 6 of the periodic table and is concretely titanium, zirconium or hafnium.

$R^6$ and $R^7$ represent each, independently of each other, hydrogen atom, a halogen atom, a hydrocarbon group having 1 - 20 carbon atoms, a silicium-containing group, an oxygen-containing group, a sulfur-containing group, a nitrogen-containing group or a phosphorus-containing group. They represent concretely a halogen atom, such as fluorine, chlorine, bromine or iodine; a hydrocarbon group having 1 - 20 carbon atoms, for example, an alkyl group, such as methyl, ethyl, propyl, butyl, hexyl or cyclohexyl; an alkenyl group, such as vinyl, propenyl or cyclohexenyl; an aralkyl group, such as benzyl, phenylethyl or phenylpropyl; or an aryl group, such as phenyl, tolyl, dimethylphenyl, naphthyl or methylnaphthyl; a halogenated hydrocarbon group in which the hydrocarbon group such as given above is substituted by halogen atom(s); a silicium-containing group, for example, hydrocarbon-monosubstituted silyl group, such as methylsilyl or phenylsilyl, a hydrocarbon -disubstituted silyl, such as dimethylsilyl or diphenylsilyl, a hydrocarbon-trisubstituted silyl, such as trimethylsilyl or triethylsilyl, a silyl ether of a hydrocarbon-substituted silyl, such as trimethylsilyl ether, a silicium-substituted alkyl group, such as trimethylsilylmethyl, or a silicium-substituted aryl group, such as trimethylsilylphenyl; an oxygen-containing group, for example, hydroxy, alkoxy such as methoxy or ethoxy, aryloxy such as phenoxy or methylphenoxy, or arylalkoxy such as phenylmethoxy or phenylethoxy; a sulfur-containing group in which the oxygen in the above oxygen-containing group is replaced by sulfur; a nitrogen-containing group, for example, amino, alkylamino, such as methylamino or dimethylamino, or an aryl- or alkylarylamino, such as phenylamino or methylphenylamino; or a phosphorus-containing group, such as dimethylphosphino.

Among them, for $R^6$, a hydrocarbon group, in particular, a hydrocarbon group having 1 - 3 carbon atoms, such as methyl, ethyl or propyl, is preferred. For $R^7$, hydrogen atom or a hydrocarbon group, especially hydrogen atom or a hydrocarbon group having 1 - 3 carbon atoms, such as methyl, ethyl or propyl is preferred.

$R^8$, $R^9$, $R^{10}$ and $R^{11}$ stand each, independently of each other, for hydrogen atom, a halogen atom, a hydrocarbon group having 1 - 20 carbon atoms or a halogenated hydrocarbon group having 1 - 20 carbon atoms. Among them, hydrogen atom, a hydrocarbon and a halogenated hydrocarbon are preferred. Among the pairs of $R^8$ with $R^9$, $R^9$ with $R^{10}$ and $R^{10}$ with $R^{11}$, at least one pair may combine together to build up a monocyclic aromatic ring together with the carbon atoms bound to such a pair.

If two or more hydrocarbon radicals or halogenated hydrocarbon rasicals are present in the groups other than that building up an aromatic ring, they may combine together to form a ring. In case where $R^{11}$ is a substituent group other than an aromatic group, it may represent preferably hydrogen atom.

For the halogen atom, for the hydrocarbon group having 1 - 20 carbon atoms and for the halogenated hydrocarbon group having 1 - 20 carbon atoms, there may be enumerated concretely those which are given for $R^6$ and $R^7$.

$X^1$ and $X^2$ in the formula (3) represent each, independently of each other, hydrogen atom, a halogen atom, a hydrocarbon group having 1 - 20 carbon atoms, a halogenated hydrocarbon group having 1 - 20 carbon atoms, an oxygen-containing group or a sulfur-containing group.

For the halogen atom, for the hydrocarbon group having 1 - 20 carbon atoms, for the halogenated hydrocarbon group having 1 - 20 carbon atoms and for the oxygen-containing group, concretely, those which are given for $R^6$ and $R^7$ may be exemplified.

For the sulfur-containing group, there may be exemplified sulfonates, such as methyl sulfonate, trifluoromethane sulfonate, phenyl sulfonate, benzyl sulfonate, p-toluene sulfonate, trimethylbenzene sulfonate, triisobutylbenzene sulfonate, p-chlorobenzene sulfonate and pentafluorobenzene sulfonate; and sulfinates, such as methyl sulfinate, phenyl sulfinate, benzene sulfinate, p-toluene sulfinate, trimethylbenzene sulfinate and pentafluorobenzene sulfinate, in addition to those which are given for $R^6$ and $R^7$.

$Y^1$ in the formula (3) stands for a divalent hydrocarbon radical having 1 - 20 carbon atoms, a divalent halogenated hydrocarbon radical having 1 - 20 carbon atoms, a divalent silicium-containig radical, a divalent germanium-containing radical, a divalent tin-containing radical, -O-, -CO-, -S-, -SO-, $-SO_2-$, $-NR^{12}-$, $-P(R^{12})-$, $-P(O)(R^{12})-$, $-BR^{12}-$ or $-AlR^{12}-$, wherein $R^{12}$ represents hydrogen, a halogen atom, a hydrocarbon group having 1 - 20 carbon atoms or a halogenated hydrocarbon group having 1 - 20 carbon atoms.

Concrete examples of $Y^1$ include alkylenes, such as methylene, dimethylmethylene, 1,2-ethylene, dimethyl-1,2-ethylene, 1,3-trimethylene, 1,4-tetramethylene, 1,2-cyclohexylene and 1,4-cyclohexylene; divalent hydrocarbon groups having 1 - 20 carbon atoms, such as diphenylmethylene and diphenyl-1,2-ethylene; halogenated hydrocarbon groups corresponding to halogenated ones of the above divalent hydrocarbon groups having 1 - 20 carbon atoms, such as chloromethylene; divalent silicium-containing radicals, for example, alkyl silylenes, alkylarylsilylenes and arylsilylenes, such as methylsilylene, dimethylsilylene, diethylsilylene, di(n-propyl)silylene, di(i-propyl)silylene, di(cyclohexyl)silylene, methylphenylsilylene, diphenylsilylene, di(p-tolyl)silylene and di(p-chlorophenyl)silylene, and alkyldisilylenes, alkylaryldisilylenes and aryldisilylenes, such as tetramethyl-1,2-disilylene and tetraphenyl-1,2-disilylene; divalent germanium-containing radicals corresponding to those in which silicium atom is replaced by germanium in the above divalent silicium-containing radicals; and divalent tin-containing radicals corresponding to those in which silicium atom is replaced by tin in the above silicium-containing radicals.

For the group $R^{12}$, a halogen atom, a hydrocarbon group having 1 - 20 carbon atoms and a halogenated hydrocarbon group having 1 - 20 carbon atoms, as given for the group $R^6$ or $R^7$, may be exemplified.

Among those exemplified above for $Y^1$, divalent silicium-containing radicals, divalent germanium-containing radicals and divalent tin-containing radicals are preferred, wherein special preference is given to divalent silicium-containing radicals, in particular, to alkylsilylenes, alkylarylsilylenes and arylsilylenes.

Concrete examples of the metallocene (b) represented by the formula (3) are recited below:

rac-ethylene(2-methyl-1-indenyl)2-zirconium dichloride,
rac-dimethylsilylene(2-methyl-1-indenyl)2-zirconium dichloride,
rac-dimethylsilylene(2-methyl-1-indenyl)2-zirconium-dimethyl,
rac-dimethylsilylene-bis(4,7-dimethyl-1-indenyl)zirconium dichloride,
rac-dimethylsilylene-bis(2,4,7-trimethyl-1-indenyl)zirconium dichloride,
rac-dimethylsilylene-bis(2,4,6-trimethyl-1-indenyl)zirconium dichloride,
rac-dimethylsilylene-bis(4-phenyl-1-indenyl)zirconium dichloride,
rac-dimethylsilylene-bis(2-methyl-4-phenyl-1-indenyl)zirconium dichloride,
rac-dimethylsilylene-bis{2-methyl-4-(α-naphthyl)-1-indenyl}zirconium dichloride,
rac-dimethylsilylene-bis{2-methyl-4-(β-naphthyl)-1-indenyl}zirconium dichloride and
rac-dimethylsilylene-bis{2-methyl-4-(1-anthracenyl)-1-indenyl}zirconium dichloride.

According to the present invention, it is also possible to use metallocenes represented by the general formula (4) given below, as the metallocene (b).

$$L^1M^2Z_2 \qquad (4)$$

in which $M^2$ is a metal of Group 4 or of the lanthanide series of the periodic table, $L^1$ denotes a derivative of non-localized π-bonding group, which provides the active site of the metal $M^2$ with a captive geometry, and the two Zs represent each, independently of each other, hydrogen atom, a halogen atom, a hydrocarbon group having 20 or less carbon atoms, a silyl group having 20 or less silicium atoms or a germyl group having 20 or less germanium atoms.

Among these metallocenes (b) represented by the formula (4), preference is given to those expressed by the following general formula (5):

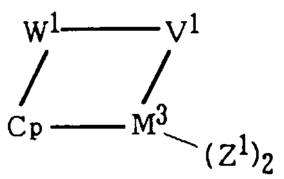

...... (5)

in which $M^3$ is titanium, zirconium or hafnium, $Z^1$ has the same meaning as Z in the general formula (4), Cp denotes a cyclopentadienyl group, a substituted cyclopentadienyl group or a derivative of these groups, which is bound to $M^3$ by π-bonding in a $\eta^5$-binding form, $W^1$ represents oxygen atom, sulfur atom, boron atom or an element of Group 14 of the periodic table or a radical containing such an element and $V^1$ is a ligand containing nitrogen, phosphorus, oxygen or sulfur. It is permissible that a condensed ring may be formed from $W^1$ and $V^1$ or from Cp and $W^1$.

Preferred examples of the group represented by Cp in the general formula (5) include cyclopentadienyl, indenyl, fluorenyl and saturated derivatives of them. They form a ring together with the metal ($M^3$). Each carbon atom in the cyclopentadienyl group may be substituted by one and the same or a different radical selected from the group consisting of halogen radicals, hydrocarbyl radicals, substituted hydrocarbyl radicals in which one or more hydrogen atoms may be replaced by a halogen atom, and hydrocarbyl-substituted matalloid radicals, wherein the metalloid is selected from the elements of Group 14 of the periodic table. Here, one or more of the substituent groups may build up together a fused ring. At least one preferred hydrogen substitution-permissible hydrocarbyl or substituted hydrocarbyl group in the cyclopentadienyl group has 1 - 20 carbon atoms and includes one or more linear or branched chain alkyl groups, one or more cyclic hydrocarbon groups, one or more alkyl-substituted cyclic hydrocarbon groups and/or one or more aromatic and substituted aromatic groups. Preferable organometalloid groups contain one or more mono-, di- and trisubstituted organometalloid groups of elements of Group 14 of the periodic table and each of the hydrocarbyl groups has 1 - 20 carbon atoms. Concrete examples of preferable organometalloid group include trimethylsilyl, triethylsilyl, ethyldimethylsilyl, methyldiethylsilyl, phenyldimethylsilyl, methyldiphenylsilyl, triphenylsilyl, triphenylgermyl and trimethylgermyl.

Concrete examples of the group $Z^1$ in the general formula (5) include hydrido, halo, alkyl, silyl, germyl, aryl, amido, aryloxy, alkoxy, phosphido, sulfido, acyl, pseudohalides, such as cyanido and azido, and acethylacetonato as well as

combinations of them wherein such combinations may be composed of identical and/or different groups.

For the metallocenes (b) represented by the general formula (5), especially those represented by the following general formula (6) are preferred:

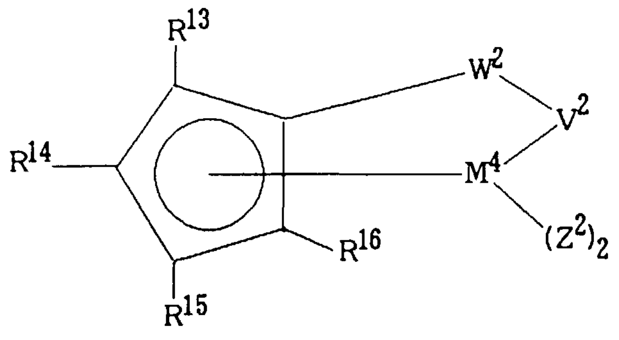

· · · · · (6)

In the formula (6), $M^4$ has the same meaning as $M^3$ in the formula (5), $V^2$ may stand either for the group -O-, -S-, -$NR^{17}$- or -$PR^{17}$- or for a neutral ligand of a two-electron doner selected from the group consisting of $OR^{17}$, $SR^{17}$, $N(R^{17})_2$ and $P(R^{17})_2$, wherein $R^{17}$ denotes hydrogen atom, an alkyl, aryl, silyl, halogenated alkyl or halogenated aryl having 20 or less atoms of the elements other than hydrogen, or, further, may form a condensed ring together with another $R^{17}$ or with $R^{18}$ referred to afterwards.

In the formula (6), $W^2$ stands for $Si(R^{18})_2$, $C(R^{18})_2$, $Si(R^{18})_2$ $Si(R^{18})_2$, $C(R^{18})_2C(R^{18})_2$, $CR^{18}$=$CR^{18}$, $C(R^{18})_2Si(R^{18})_2$, $Ge(R^{18})_2$, $BR^{18}$ or $B(R^{18})_2$, wherein $R^{18}$ has the same meaning as $R^{17}$ given above.

In the formula (6), $R^{13}$ - $R^{16}$ may stand each, independently of each other, for hydrogen atom or for a radical of alkyl, aryl, silyl, germyl, cyano or halo, which has 20 or less atoms other than hydrogen, or a combination of such radicals, such as alkaryl, aralkyl, silyl-substituted alkyl, silyl-substituted aryl, cyanoalkyl, cyanoaryl, haloalkyl or halosilyl, wherein it is possible that one or more pairs of adjoining groups of $R^{13}$ - $R^{16}$ may form a hydrocarbyl ring condensed with the cyclopentadienyl moiety.

$Z^2$ in the formula (6) may represent a hydrido or may stand for a radical selected from the group consisting of halo and radicals of alkyl, arylsilyl, germyl, aryloxy, alkoxy, amido and silyloxy having 20 or less atoms of the elements other than hydrogen, as well as combinations of them (for example, alkaryl, aralkyl, silyl, substituted alkyl, silyl-substituted aryl, aryloxyalkyl, aryloxyaryl, alkoxyalkyl, alkoxyaryl, amidoalkyl, amidoaryl, siloxyalkyl, siloxyaryl, amidosiloxyalkyl, haloalkyl and haloaryl) and neutral Lewis bases having up to 20 atoms of elements other than hydrogen.

When $V^2$ in the metallocene (b) represented by the formula (6) is a neutral two-electron-donating ligand, the bonding between $M^4$ and $V^2$ is constituted of coordinate-covalent bond. Here, the complex can exist as a dimer or a higher oligomer.

In the metallocene (b) represented by the formula (6), it is preferable that at least one among $R^{13}$ - $R^{16}$, $Z^2$, $R^{17}$ and $R^{18}$ constitutes an electron donating moiety and, in particular, that $V^2$ is an amido or a phosphido corresponding to -$NR^{19}$- or -$PR^{19}$- wherein $R^{19}$ represents an alkyl having 1 - 10 carbon atoms or an aryl having 6 - 10 carbon atoms.

Among the metallocenes (b) represented by the formula (6), those amidosilane and amidoalkanediyl compounds which are represented by the following general formula (7) are preferred.

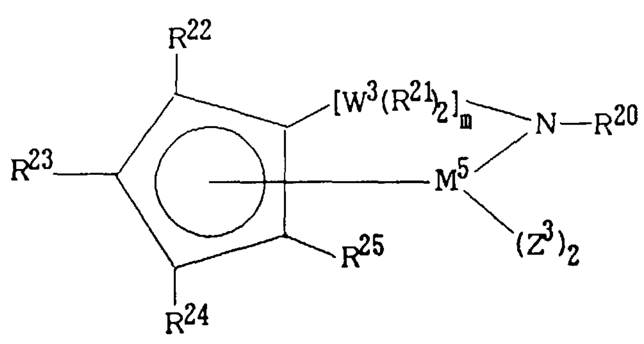

· · · · · (7)

In the formula (7), $M^5$ is titanium, zirconium or hafnium bound to the cyclopentadienyl group by a $\eta^5$ bonding, $R^{20}$ - $R^{25}$ represent each, independently of each other, a radical selected from the group consisting of hydrogen and radicals of silyl, alkyl and aryl each having up to 10 carbon atoms as well as combinations of them or adjoining pair(s) among $R^{22}$ - $R^{25}$ may form a hydrocarbyl ring condensed with the cyclopentadienyl moiety, $W^3$ stands for silicium atom or carbon atom, $Z^3$ represents hydrido or stands for a halo or an alkyl, aryl, aryloxy or alkoxy each having up to 10 carbon atoms.

For the metallocenes (b) represented by the formula (7), those in which $R^{20}$ stands for methyl, ethyl, propyl, butyl, pentyl, hexyl (inclusive of isomers), norbornyl, benzyl or phenyl, $R^{22}$ - $R^{25}$ denote each, independently of each other, hydrogen atom, methyl, ethyl, propyl, butyl, pentyl, hexyl (inclisive of isomers), norbornyl or benzyl and $Z^3$ denotes chloro, bromo, iodo, methyl, ethyl, propyl, butyl, pentyl, hexyl (inclusive of isomers), norbornyl, benzyl or phenyl are preferred. Also, metallocenes in which groups among $R^{22}$ - $R^{25}$ form a condensed ring and in which the cyclopentadienyl moiety constitutes indenyl, tetrahydroindenyl, fluorenyl or octahydrofluorenyl ring are preferred.

Concrete examples of the metallocenes (b) represented by the formula (7) include (t-butylamido)dimethyl(tetramethyl-$\eta^5$-cyclopentadienyl)silanetitanium dichloride, (t-butylamido)tetramethyl-$\eta^5$-cyclopentadienyl)-1,2-ethanediylzirconium dichloride, (tert-butylamido)(tetramethyl-$\eta^5$-cyclopentadienyl)-1,2-ethanediyltitanium dichloride, (methylamido)(tetramethyl-$\eta^5$-cyclopentadienyl)-1,2-ethanediylzirconium dichloride, (methylamido)(tetramethyl-$\eta^5$-cyclopentadienyl)-1,2-ethane diyltitanium dichloride, (ethylamido)(tetramethyl-$\eta^5$-cyclopentadienyl)methylenetitanium dichloride, (t-butylamido)dimethyl(tetramethyl-$\eta^5$-cyclopentadienyl)silanezirconium dibenzyl, (benzylamido)dimethyl(tetramethyl-$\eta^5$-cyclopentadienyl)silanetitanium dichloride and (phenylphosphido)dimethyl(tetramethyl-$\eta^5$-cyclopentadienyl)silanezirconium dibenzyl.

According to the present invention, the followings may also be used for the metallocene (b):

Ethylene[2-methyl-4(9-phenanthryl)-1-indenyl](9-fluorenyl) zirconium dichloride
Ethylene[2-methyl-4(9-phenanthryl)-1-indenyl](2,7-dimethyl -9-fluorenyl)zirconium dichloride
Ethylene[2-methyl-4(9-phenanthryl)-1-indenyl](2,7-di-tert-butyl-9-fluorenyl)zirconium dichloride
Ethylene(2-methyl-4,5-benzo-1-indenyl)(9-fluorenyl)zirconium dichloride
Ethylene(2-methyl-4,5-benzo-1-indenyl)(2,7-dimethyl-9-fluorenyl)zirconium dichloride
Ethylene(2-methyl-4,5-benzo-1-indenyl)(2,7-di-tert-butyl-9-fluorenyl)zirconium dichloride
Ethylene(2-methyl-$\alpha$-acenaphtho-1-indenyl)(9-fluorenyl)zirconium dichloride
Ethylene(2-methyl-$\alpha$-acenaphtho-1-indenyl)(2,7-dimethyl-9-fluorenyl)zirconium dichloride
Ethylene(2-methyl-$\alpha$-acenaphtho-1-indenyl)(2,7-di-t-butyl-9-fluorenyl)zirconium dichloride
Dimethylsilylene[2-methyl-4(9-phenanthryl)-1-indenyl](9-fluorenyl)zirconium dichloride

As others, those in which zirconium in the above-exemplified zirconium metallocenes is replaced by titanium or by hafnium may also be exemplified.

As to the method for preparing the metallocenes (b), reference may be made to, for example, Japanese Patent Kokai Hei-3-163088 A (corresponding to European Patent No. 416815 A2/1991).

For the metallocene (b) to be used according to the present invention, those represented by the general formula (4) are preferred particularly in view of the polymerization activity and transparency, rogidity, heat resistance and shock resistance of the formed product. The metallocenes (b) may be used alone or in a combination of two or more of them.

The metallocenes (b) to be used according to the present invention may be diluted with a hydrocarbon or halogenated hydrocarbon diluent upon its use.

Now, the description is directed to the organic aluminum oxy-compound (c) and to the ionized ionic compound (d) to be used for preparing the metallocene catalyst (a).

As the organic aluminum oxy-compound (c) to be used according to the present invention, known aluminoxanes and those benzene-insoluble organic aluminum oxy-compounds which are exemplified in Japanese Patent Kokai Hei-2-78687 A (corresponding to US Patent No. 4,990,640) may be used.

These known aluminoxanes (c) are represented by the following general formulae (8) and (9):

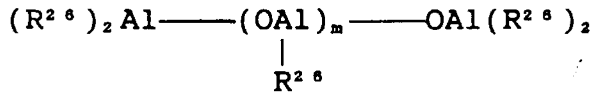 ..... (8)

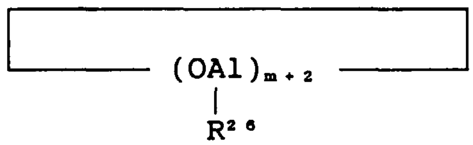 ...... (9)

In the above formulae (8) and (9), $R^{26}$ is a hydrocarbon group, such as methyl, ethyl, propyl or butyl, wherein preference is given for methyl and ethyl, especially for methyl, and m is an integer of 2 or greater, preferably of 5 - 40.

Here, it is also possible that the aluminoxane (c) be composed of mixed alkyloxyaluminum units composed of an alkyloxyaluminum unit represented by the formula $[OAl(R^{27})]$ and of an alkyloxyaluminum unit represented by the formula $[OAl(R^{28})]$, wherein $R^{27}$ and $R^{28}$ are each a hydrocarbon group which may be different from each other and may stand for those given for $R^{26}$.

The aluminoxane (c) can be prepared, for example, by the methods given below and is obtained usually in a form of solution in a hydrocarbon solvent:

(1) To a suspension of a salt containing absorbed moisture or water of cristallization, such as hydrated salt of magnesium chloride, copper sulfate, aluminum sulfate, nickel sulfate or cerous chloride, in an aromatic hydrocarbon solvent, an organoaluminum compound, such as trialkylaluminum, is added to cause reaction with water and recovering the reaction product as a solution in the solvent.

(2) An organoaluminum compound, such as trialkylaluminum, is reacted dierectly with water (liquid water, ice or steam) in a suitable aromatic hydrocarbon solvent, such as benzene, toluene, ethyl ether or tetrahydrofuran, to form a solution of the reaction product in the solvent, which is recovered.

(3) An organoaluminum compound, such as trialkylaluminum, is reacted with an organotin oxide, such as dimethyltin oxide or dibutyltin oxide, in a suitable hydrocarbon solvent, such as decane, benzene or toluene, to form a solution of the reaction product in the solvent, which is recovered.

As the solvent used in the preparation of the aluminoxane (c), there may be exemplified aromatic hydrocarbons, such as benzene, toluene, xylene, cumene and cymene; aliphatic hydrocarbons, such as pentane, hexane, heptane, octane, decane, dodecane, hexadecane and octadecane; alicyclic hydrocarbons, such as cyclopentane, cyclohexane, cyclooctane and methylcyclopentane; ethers, such as ethyl ether and tetrahydrofuran; petroleum cut fractions, such as kerosene and gas oil; and halogenated hydrocarbons, such as the chlorinated or brominated products of the hydrocarbons given above. Among these solvents, especially aromatic hydrocarbons are preferred.

For the ionized ionic compound (d), there may be exemplified Lewis acids, ionic compounds, boranes and carboranes. Such ionized ionic compounds (d) are given in the literatures, for example, Japanese Patent Kohyo Hei-1-501950 (corresponding US Patent Nos. 5,198,401, 5,278,119, 5,384,299, 5,391,629, 5,407,884, 5,408,017, 5,470,927, 5,483,014, 5,599,761 and 5,621,126), Japanese Patent Kohyo Hei-1-502036 (corresponding US Patent Nos. 5,153,157, 5,198,401, 5,241,025, 5,384,299, 5,391,629, 5,408,017, 5,470,927, 5,599,761 and 5,621,126), Japanese Patent Kokais Hei-3-179005 (corresponding US Patent No. 5,561,092), Hei-3-179006 (corresponding US Patent No. 5,225,500), Hei-3-207703 (corresponding US Patent No. 5,387,568), Hei-3-207704 (corresponding US Patent Nos. 5,519,100 and 5,614,457 ) and US Patent No. 5,321,106.

Examples of the Lewis acid to be used as the ionized ionic compound (d) include compounds represented by the formula $BR_3$ (R may be identical with or different from each other and may stand for fluorine or a phenyl group which may have substituent group(s), such as fluorine, methyl and trifluorophenyl), for example, trifluoroboron, triphenylboron, tris(4-fluorophenyl)boron, tris(3,5-difluorophenyl)boron, tris(4-fluoromethylphenyl)boron and tris(pentafluorophenyl)boron.

The ionic compound to be used as the ionized ionic compound (d) may be a salt composed of a cationic component and an anionic component. The anion functions to stabilize the transition metal of the metallocene by building up an ion pair when reacted with the metallocene (b). For such an anion, anions of organoboron, organoarsene and organoaluminum are enumerated, wherein an anion of relatively bulky geometry permitting stabilization of transition metal is preferred. For the cation, matal cations, organometallic cations, carbonium cations, oxonium cations, sulfonium cations, phosphonium cations and ammonium cation are enumerated. More specifically, triphenylcarbenium cation, tributyl-

ammonium cation, N,N-dimethylammonium cation and ferrocenium cations are preferred.

Among them, ionic compounds having boron-containing moiety as anion are preferred. Concretely, trialkyl-substituted ammonium salts, N,N-dialkylanilinium salts, dialkylammonium salts and triarylphosphonium salts are exemplified for the ionic compound.

As the trialkyl-substituted ammonium salt, there may be enumerated, for example, triethylammonium tetra(phenyl)borate, tripropylammonium tetra(phenyl)borate, tri(n-butyl)ammonium tetra(phenyl)borate and trimethylammonium tetra(p-tolyl)borate.

As the N,N-dialkylanilinium salt, there may be enumerated, for example, N,N-dimethylanilinium tetra(phenyl)borate.

As the dialkylammonium salt, there may be enumerated, for example, di(n-propyl)ammonium tetra(pentafluorophenyl)barate and dicyclohexylammonium tetra(phenyl)borate.

As the triarylphosphonium salt, there may be enuemrated, for example, triphenylphosphonium tetra(phenyl)borate, tri(methylphenyl)phosphonium tetra(phenyl)borate and tri(dimethylphenyl)phosphonium tetra(phenyl)borate.

As the ionic compound, there may further be enumerated triphenylcarbenium tetrakis(pentafluorophenyl)borate, N,N-dimethylanilinium tetrakis(pentafluorophenyl)borate and ferrocenium tetra(pentafluorophenyl)borate.

As the borane compound to be used as the ionized ionic compound (d), the following compounds may also be enumerated:

Decaborane(14)
Salts of such anion as bis[tri(n-butyl)ammonium] nonaborate and bis[tri(n-butyl)ammonium] decaborate
Salts of metal borane anions, such as tri(n-butyl)ammonium bis(dodecahydridododecaborate)cobaltate(III) and bis[tri(n-butyl)ammonium] bis(dodecahydridododecaborate)nickelate(III).

As the carboranes to be used as the ionized ionic compound (d), there may be enumerated, for example, salts of such anions as 4-carbnonaborane(14) and 1,3-dicarbnonaborane(13); and salts of metal carborane anions, such as tri(n-butyl)ammonium bis(nonahydrido-1,3-dicarbnonaborate)cobaltate(III) and tri(n-butyl)ammonium bis(undecahydrido-7,8-dicarbundecaborate) ferrate(III).

These ionized ionic compounds (d) may be used alone or in a combination of two or more of them.

The metallocene catalyst to be used according to the present invention may contain on requirement, in addition to the components (b), (c) and (d) given above, a further component (e) of an organoaluminum compound given below.

As the organoaluminum compound (e) to be used on requirement according to the present invention, for example, the organoaluminum compounds represented by the following general formula (10) may be enumerated.

$$(R^{29})_nAlX_{3-n} \qquad (10)$$

in which $R^{29}$ is a hydrocarbon group having 1 - 15 carbon atoms, preferably 1 - 4 carbon atoms, X denotes a halogen atom or hydrogen atom and n is an integer of 1 - 3.

The hydrocarbon group having 1 - 15 carbon atoms for $R^{29}$ may be, for example, alkyl, cycloalkyl or aryl and, concretely, methyl, ethyl, n-propyl, isopropyl or isobutyl.

Concrete examples of such an organoaluminum compound (e) include the followings:

Trialkylaluminums, such as trimethylaluminum, triethylaluminum, triisopropylaluminum, tri-n-butylaluminum, triisobutylaluminum and tri-sec-butylaluminum; alkenylaluminums, such as those represented by the general formula $(i\text{-}C_4H_9)_xAl_y(C_5H_{10})_z$, in which x, y and z denote each a positive integer wherein $z \geqq 2x$, for example, isoprenylaluminum; dialkylaluminum halides, such as dimethylaluminum chloride and diisobutylaluminum chloride; dialkylaluminum dihydrides, such as diisobutylaluminum hydride and so on; dialkylaluminum alkoxides, such as dimethylaluminum methoxide and so on; and dialkylaluminum aryloxides, such as diethylaluminum phenoxide and so on.

It is permissible to use, as the organoaluminum compound (e), also the compounds represented by the following formula (11):

$$(R^{31})_nAl(R^{30})_{3-n} \qquad (11)$$

in which $R^{31}$ has the same meaning as foregoing $R^{29}$, $R^{30}$ is a group of $-OR^{32}$, $-OSi(R^{33})_3$, $-OAl(R^{34})_2$, $-N(R^{35})_2$, $-Si(R^{36})_3$ or $-N(R^{37})Al(R^{38})_2$ and n is a number of 1 - 2, wherein $R^{32}$, $R^{33}$, $R^{34}$ and $R^{38}$ denote each methyl, ethyl, isopropyl, isobutyl, cyclohexyl or phenyl, $R^{35}$ denotes hydrogen atom, methyl, ethyl, isopropyl, phenyl or trimethylsilyl and $R^{36}$ and $R^{37}$ represent each methyl or ethyl.

The followings are concrete examples of such an organoaluminum compound (e):

$(C_2H_5)_2Al[OSi(CH_3)_3]$
$(iso\text{-}C_4H_9)_2Al[OSi(CH_3)_3]$

$(C_2H_5)_2Al[OAl(C_2H_5)_2]$
$(CH_3)_2Al[N(C_2H_5)_2]$
$(C_2H_5)_2Al[NH(CH_3)]$
$(iso\text{-}C_4H_6)_2Al[N\{Si(CH_3)_3\}_2]$

The metallocene catalyst (a) to be used according to the present invention may be a solid catalyst having at least one of the above-mentioned components (b), (c), (d) and (e) supported on a fine particulate carrier.

The metallocene catalyst (a) may also be a prepolymer-catalyst composed of a fine particulate carrier, the component (b) and the component (c) [or the component (d)] and a polymer or a copolymer produced by a preliminary polymerization, with, if necessary, possible incorporation of the component (e).

The fine particulate carrier to be used in the solid catalyst or in the prepolymer-catalyst may be a granular or a fine particulate solid of an organic or inorganic compound having a particle size of 10 - 300 μm, preferably 20 - 200 μm.

For the inorganic carrier, porous oxides are preferred, of which concrete examples include $SiO_2$, $Al_2O_3$, MgO, $ZrO_2$, $TiO_2$, $B_2O_3$, CaO, ZnO, BaO and $ThO_2$ as well as mixtures of them, such as $SiO_2$/MgO, $SiO_2/Al_2O_3$, $SiO_2/TiO_2$, $SiO_3/V_2O_5$, $SiO_2/Cr_2O_3$ and $SiO_2/TiO_2$/MgO. Among them, those in which at least one selected from the group consisting of $SiO_2$ and $Al_2O_3$ is the principal constituent are preferred.

The inorganic carrier may contain a small amount of one or more of carbonate, sulfate, nitrate or other oxide, such as $Na_2CO_3$, $K_2CO_3$, $CaCO_3$, $MgCO_3$, $Na_2SO_4$, $Al_2(SO_4)_3$, $BaSO_4$, $KNO_3$, $Mg(NO_3)_2$, $Al(NO_3)_3$, $Na_2O$, $K_2O$ and $Li_2O$.

While the properties of the fine particulate carrier may be variable for each specific carrier and in accordance with the method of preparation thereof, those which have a specific surface area of 50 - 1,000 $m^2$/g, preferably 100 - 700 $m^2$/g and a pore volume of 0.3 - 2.5 $cm^3$/g are preferred. The fine particulate carrier may , if necessary, be calcined at a temperature of 100 - 1,000°C, preferably 150 - 700°C for practical use.

For the fine particulate carrier, there may further be enumerated granular or fine particulate solid materials of organic compounds having particle sizes in the range of 10 - 300 μm. Such organic fine particulate carriers may be, for example, homo- and copolymer resins constituted mainly of an α-olefin having 2 - 14 carbon atoms, such as ethylene, propylene, 1-butene or 4-methyl-1-pentene, and homo- and copolymer resins constituted mainly of vinylcyclohexane and/or styrene.

For producing the α-olefin/aromatic vinyl compound copolymer (A) using the metallocene catalyst (a), an α-olefin and an aromatic vinyl compound are subjected to copolymerization usually by a solution polymerization or a slurry polymerization in a liquid medium in the presence of the metallocene catalyst (a).

For such a liquid medium, hydrocarbon solvents, for example, aliphatic hydrocarbons, such as pentane, hexane, heptane, octane, decane, dodecane and kerosene, as well as their halogenated derivatives; alicyclic hydrocarbons, such as cyclohexane, methylcyclopentane and methylcyclohexane, as well as their halogenated derivatives; and aromatic hydrocarbons and their halogenated derivatives, such as benzene, toluene, xylene, ethylbenzene and chlorobenzene, may be employed solely or in a combination.

It is also possible to produce the α-olefin/aromatic vinyl compound copolymer (A) by subjecting an α-olefin and an aromatic vinyl compound to copolymerization by a vapor phase polymerization in the presence of the metallocene catalyst (a). Here, a solid catalyst in which the metallocene (b) is supported on a fine particulate carrier is used especially favorably as the metallocene catalyst (a).

The copolymerization of α-olefin with aromatic vinyl compound may be realized either by a batchwise or a continuous process. For a continuous process, the metallocene catalyst (a) may be used usually in such an amount as explained below.

Thus, the concentration of the metallocene (a) in the polymerization system may be in the range of 0.00005 - 0.1 mmol/liter of the polymerization space, preferably 0.0001 - 0.05 mmol/liter. The organic aluminum oxy-compound (c) may be supplied to the polymerization system at such a rate as to reach an atomic ratio of aluminum to metallocene (b) [i.e. Al/transition metal] in the polymerization system within the range of 0.1 - 10,000, preferably 1 - 5,000. The ionized ionic compound (d) may be supplied to the polymerization system at such a rate as to achieve a mole ratio of the ionized ionic compound (d) to the metallocene (b) [i.e. moles of ionized ionic compound (d)/moles of metallocene(b)] in the polymerization system within the range of 0.1 - 20, preferably 1 - 10. The organoaluminum compound (e) may, when used, be supplied to the polymerization system usually in an amount of 0 - 5 mmol/liter of the polymerization space, preferably 0 - 2 mmol/liter. The copolymerization for producing the α-olefin/aromatic vinyl compound copolymer may be realized usually under the conditions of a temperature of -30 to +250 °C, preferably 0 to +200°C, and a pressure exceeding the normal pressure and up to 7.8 MPa (80 Kg/$cm^2$, gauge), preferably up to 4.9 MPa (50 Kg/$cm^2$, gauge).

The polymerization duration (the average residence time in the polymerization reactor for continuous process) may usually be in the range from 5 minutes to three hours, preferably from 10 minutes to 1.5 hours, though variable depending on, for example, catalyst concentration and polymerization temperature.

In the production of the α-olefin/aromatic vinyl compound copolymer (A), the α-olefin and the aromatic vinyl compound are supplied to the polymerization system each in such an amount that a copolymer having a specific composition as given above is obtained. It is permissible to incorporate in the copolymerization a molecular weight regulator, such as hydrogen.

By realizing the copolymerization of the α-olefin and the aromatic vinyl compound in a manner as given above, the α-olefin/aromatic vinyl compound copolymer is obatined usually in the polymerization liquor containing it. The polymerization liquor is then subjected to a usual aftertreatment to separate the α-olefin/aromatic vinyl compound copolymer (A).

In the composition according to the present invention, there may be incorporated a nucleating agent (C) in addition to the components (A) and (B). By incorporating the nucleating agent, a micronization of the crystal grains of the component (A) can be attempted with the result of increase in the crystallization velocity, whereby a composition capable of bringing about a formed product superior in the transparency, rigidity and heat resistance can be obtained, together with an attainment of a high speed molding. Even though the nucleating agent (C) is incorporated, occurence of troubles, such as deterioration in the appearance of the formed product due to bleeding out of the nucleating agent (C) and obstruction in the efficient molding work, is scarce.

For the nucleating agent (C), known ones may be employed, for example, nucleating agents based on rosin, based on organic phosphorus compounds, based on sorbitol, based on aromatic carboxylic acids, based on high melting polymers and based on inorganic materials. Among them, those based on rosin and based on sorbitol, especially those based on sorbitol are preferred. When a nucleating agent based on rosin or based on sorbitol is used, a formed product having better balance between the rigidity, transparency and shock resistance can be obtained. In particular, when a nucleating agent based on sorbitol is used, a formed product which is superior especially in the balance between rigidity, transparency and shock resistance can be obtained with smaller amount of the nucleating agent. The nucleating agent (C) may be incorporated alone or in a combination of two or more agents.

The amount of the nucleating agent (C) to be blended with the composition may favorably be in the range from 0.01 to 10 parts by weight, preferably from 0.1 to 5 parts by weight, per 100 parts by weight of the component (A).

For the nucleating agent (C) based on rosin, those containing a metal salt of a rosin as a main component in an amount of 5 - 100 % by weight, preferably 10 - 100 % by weight of the total mass may be employed. Here, the "metal salt of a rosin" means a reaction product of the rosin with a metal compound.

As the rosin, there may be exemplified natural rosins, such as gum rosin, tall oil rosin and wood rosins; modified rosins, such as disproportionated rosins, hydrogenated rosins, dehydrogenated rosins, polymerized rosins and α,β-ethylenically unsaturated carboxylic acid-modified rosins; and refined products of the above natural rosins and the modified rosins.

As the unsaturated carboxylic acid to be used for producing the above α,β-unsaturated carboxylic acid-modified rosin, there may be enumerated, for example, maleic acid, maleic anhydride, fumaric acid, itaconic acid, itaconic anhydride, citraconic acid, acrylic acid and methacrylic acid.

In rosins, usually a plurality of resin acids are contained, such as pimaric acid, sandarachopimaric acid, parastophosphoric acid, isopimaric acid, abietic acid, dehydroabietic acid, neoabietic acid, dihydropimaric acid, dihydroabietic acid and tetrahydroabietic acid.

For the metal compound to be reacted with the rosin to form a salt, there may be employed a compound of a metal, such as sodium, potassium or magnesium, capable of forming a salt with the rosin. Concrete examples of such a metal compound include chlorides, nitrates, acetates, sulfates, carbonates, oxides and hydroxides of the above-mentioned metals.

For the matal salts of rosins, salts of sodium, potassium and magnesium with the above-mentioned rosins are favourable. It is furthermore preferable that the rosins are disproportionated, hydrogenated and dehydrogenated ones, wherein special preference is given to dehydroabietic acid, dihydroabietic acid and dihydropimaric acid as well as derivatives of these acids.

As a more concrete example of the rosin, a compound based on rosin represented by the following general formula (12) may be enumerated.

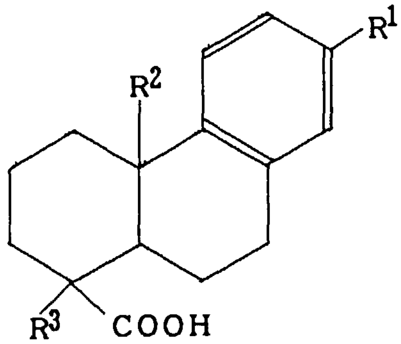

...... (12)

in which $R^1$, $R^2$ and $R^3$ may be identical with or different from each other and denote each hydrogen atom or an alkyl, cycloalkyl or aryl group.

Concrete examples of the alkyl group include those having 1 - 8 carbon atoms, such as methyl, ethyl, n-propyl, i-propyl, n-butyl, i-butyl, t-butyl, pentyl, heptyl and octyl, wherein they may have substituent(s), such as hydroxyl, carboxyl, alkoxy and halogen.

Concrete examples of the cycloalkyl group include those having 5 - 8 carbon atoms, such as cyclopentyl, cyclohexyl and cycloheptyl, wherein they may have substituent(s), such as hydroxyl, carboxyl, alkoxy and halogen.

Concrete examples of the aryl group include those having 6 - 10 carbon atoms, such as phenyl, tolyl and naphthyl, wherein they may have substituent(s), such as hydroxyl, carboxyl, alkoxy and halogen.

Among the compounds represented by the general formula (12), those in which $R^1$, $R^2$ and $R^3$ denote each an identical or different alkyl group are preferred, wherein special preference is given for those in which $R^1$ denotes i-propyl and $R^2$ and $R^3$ stand each for methyl. Metal salts of such a compound brings about a superior effect for increasing the crystallization velocity.

As the compound represented by the general formula (12), there may be exemplified concretely tetrahydroabietic acid.

The compound represented by the general formula (12), such as tetrahydroabietic acid, can be obtained by subjecting a natural rosin to a disproportionation or to a dehydrogenation, followed by a refining treatment.

A metal salt of the compound represented by the general formula (12) may be expressed by the following general formula (13).

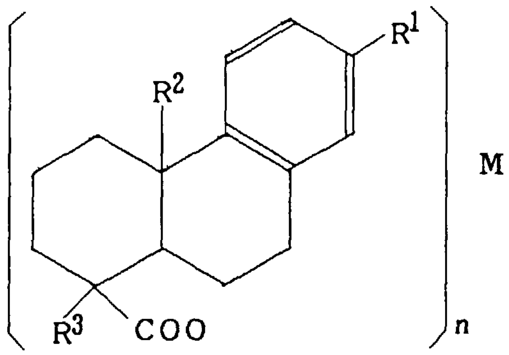

...... (13)

in which M represents a metal ion of a valency of 1 - 3, $R^1$, $R^2$ and $R^3$ are the same as those given in the general formula (12) and n denotes an integer corresponding to the valency of M.

In the general formula (13), M represents a metal ion having a valency of 1 - 3, concrete examples of which include monovalent metal ions of, for example, lithium, sodium, potassium, rubidium and cesium; divalent metal ions of, for example, beryllium, magnesium, calcium, strontium, barium and zinc; and trivalent metal ions of, for example, aluminum and so on. Among them, monovalent and divalent metal ions are preferable and especially ions of sodium, potassium and magnesium are preferred.

Among the salts represented by the general formula (13), those in which $R^1$, $R^2$ and $R^3$ represent each an identical or different alkyl group and those in which M is a mono- or divalent metal ion are preferred, wherein special preference is given for those in which $R^1$ represents i-propyl, $R^2$ and $R^3$ stand each for methyl and those in which M is an ion of sodium, potassium or magnesium and most preferable ones are those in which $R^1$ represents i-propyl, $R^2$ and $R^3$ stand

each for methyl and M is potassium or magnesium ion. Such salts will bring about a superior effect of increasing the crystallization velocity.

As the salts represented by the general formula (13), there may be enumerated concretely, for example, metal salts of dehydroabietic acid, such as lithium dehydroabietate, sodium dehydroabietate, potassium dehydroabietate, beryllium dehydroabietate, magnesium dehydroabietate, calcium dehydroabietate, zinc dehydroabietate and aluminum dehydroabietate.

The salts represented by the general formula (13) can be prepared by reacting the compounds represented by the general formula (12) with compounds of the corresponding metals in a manner known per se. For example, if the compound of the general formula (13) is a metal dehydroabietate, this can be produced by reacting a compound of corresponding metal with dehydroabietic acid represented by the following general formula (14) in a manner known per se.

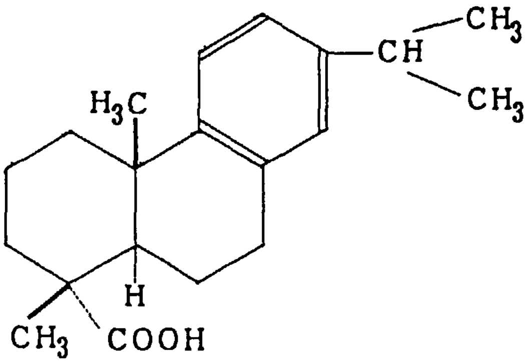

........ (14)

The nucleating agent (C) based on rosin can be used alone or in a combination of two or more thereof. For example, two or more salts represented by the general formula (13) in which $R^1$ to $R^3$ denote one and the same group for all salts and M is different or in which at least one among $R^1$ to $R^3$ is different between the salts and M is common therebetween can be used in combination.

For the nucleating agent (C) based on rosin, all the constituent compounds may not necessarily be metal salt of rosin, but part of the rosin nucleating agent may remain without being converted into salt. Thus, a rosin nucleating agent having a content of 5 - 100 % by weight, preferably 10 - 100 % by weight of rosin metal salt may be used. For example, those in which the salt represented by the general formula (13) is contained in an amount of 5 - 100 %, preferably 10 - 100 %, based on the total weight of the nucleating agent composed of the compound represented by the general formula (12) and the salt represented by the general formula (13), may be employed. Here, those in which the metal (M) amounts to 0.05 - 1 equivalent per one equivalent of the carboxyl group in the compound represented by the general formula (12) are preferred. It is particularly preferable to add 0.3 - 5 parts by weight, most preferably 0.3 - 3 parts by weight of the nucleating agent (C) based on rosin to 100 parts by weight of the component (A).

For the nucleating agent (C) based on organic phosphorus compound, there may be exemplified those which are represented by the following general formula (15).

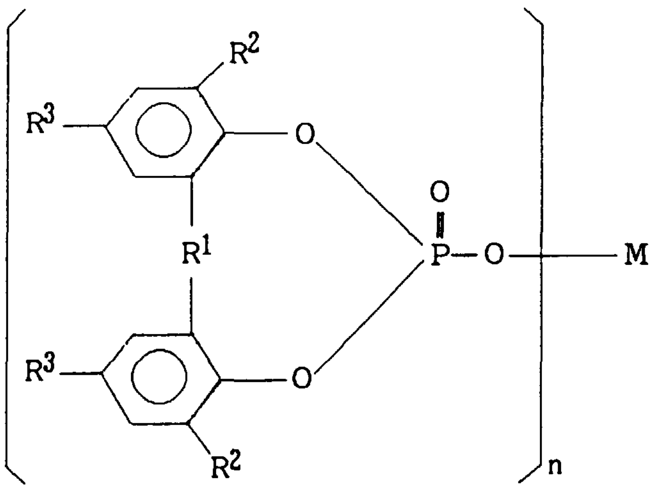

...... (15)

in which $R^1$ denotes oxygen atom, sulfur atom or a hydrocarbon group having 1 - 10 carbon atoms, $R^2$ and $R^3$ denote each hydrogen atom or a hydrocarbon group having 1 - 10 carbon atoms, wherein $R^2$ and $R^3$ may be identical with or different from each other or any of the pairs $R^2$ with another $R^2$, $R^3$ with another $R^3$ and both $R^2$ with $R^3$ may be bound together to form a ring, M is a metal having a valency of 1 - 3 and n is an integer of 1 - 3.

Concrete examples of the compound represented by the general formula (15) include sodium 2.2'-methylene-bis(4,6-di-t-butylphenyl) phosphate, sodium 2,2'-ethylidene-bis(4,6-di-t-butylphenyl) phosphate, lithium 2,2'-methylene-bis(4,6-di-t-butylphenyl) phosphate, lithium 2,2'-ethylidene-bis(4,6-di-t-butylphenyl) phosphate, sodium 2,2'-ethylidene-bis(4-i-propyl-6-t-butylphenyl) phosphate, lithium 2,2'-methylene-bis(4-methyl-6-t-butylphenyl) phosphate, lithium 2,2'-methyl-ene-bis(4-ethyl-6-t-butylphenyl) phosphate, calcium bis[2,2'-thio-bis(4-methyl-6-t-butylphenyl) phosphate], calcium bis[2,2'-thio-bis(4-ethyl-6-t-butyl-phenyl) phosphate], calcium bis[2,2'-thio-bis(4,6-di-t-butylphenyl) phosphate], magnesium bis[2,2'-thio-bis(4,6-di-t-butylphenyl) phosphate], magnesium bis[2,2'-thio-bis(4-t-octylphenyl) phosphate], sodium 2,2'-butylidene-bis(4,6-dimethylphenyl) phosphate, sodium 2,2'-butylidene-bis(4,6-di-t-buthylphenyl) phosphate, sodium 2,2'-t-octylmethylene-bis(4,6-dimethylphenyl) phosphate, sodium 2,2'-t-octylmethylene-bis(4,6-di-t-butylphenyl) phosphate, calcium bis[2,2'-methylene-bis(4,6-di-t-butylphenyl) phosphate], magnesium bis[2,2'-methylene-bis(4,6-di-t-butylphenyl) phosphate], barium bis[2,2'-methylene-bis(4,6-di-t-butylphenyl) phosphate], sodium 2,2'-methylene-bis(4-methyl-6-t-butylphenyl) phosphate, sodium 2,2'-methylene-bis(4-ethyl-6-t-butylphenyl) phosphate, sodium (4,4'-dimethyl-6,6'-di-t-butyl-2,2'-biphenyl) phosphate, calcium bis[4,4'-dimethyl-6,6'-di-t-butyl-2,2'-biphenyl) phosphate], sodium 2,2'-ethylidene-bis(4-m-butyl-6-t-butylphenyl) phosphate, sodium 2,2'-methylene-bis(4,6-di-methylphenyl) phosphate, sodium 2,2'-methylene-bis(4,6-di-ethylphenyl) phosphate, potassium 2,2'-ethylidene-bis(4,6-di-t-butylphenyl) phosphate, calcium bis[2,2'-ethylidene-bis(4,6-di-t-butylphenyl) phosphate], magnesium bis[2,2'-ethylidene-bis(4,6-di-t-butylphenyl) phosphate], barium bis[2,2'-ethylidene-bis(4,6-di-tert-butylphenyl) phosphate], aluminum tris[2,2'-methylene-bis(4,6-di-t-butyl-phenyl) phosphate], aluminum tris[2,2'-ethylidene-bis(4,6-di-t-butylphenyl) phosphate] and mixtures of two or more of them. Among them, sodium 2,2'-methylene-bis(4,6-di-t-butylphenyl) phosphate is preferred.

As preferred nucleating agent (C) based on organophosphate, those represented by the following general formula (16) may be exemplified.

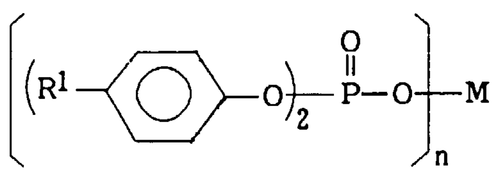

...... (16)

in which $R^1$ denotes hydrogen atom or a hydrocarbon group having 1 - 10 carbon atoms, M is a metal atom having a valency of 1 - 3 and n is an integer of 1 - 3.

Concrete examples of the nucleating agent (C) based on organophosphate represented by the general formula (16) include sodium bis(4-tert-butylphenyl) phosphate, sodium bis(4-methylphenyl) phosphate, sodium bis(4-ethylphenyl) phosphate, sodium bis(4-i-propylphenyl) phosphate, sodium bis(4-tert-butylphenyl) phosphate, sodium bis(4-tert-octylphenyl) phosphate, potassium bis(4-tert-butylphenyl) phosphate, calcium bis(4-tert-butylphenyl) phosphate, magnesium bis(4-tert-butylphenyl) phosphate, lithium bis(4-tert-butylphenyl) phosphate, aluminum bis(4-tert-butylphenyl) phosphate and mixtures of two or more of them. Among them, sodium bis(4-tert-butylphenyl) phosphate is preferred.

As the nucleating agent (C) based on sorbitol, those represented by the following general formula (17) may be exemplified.

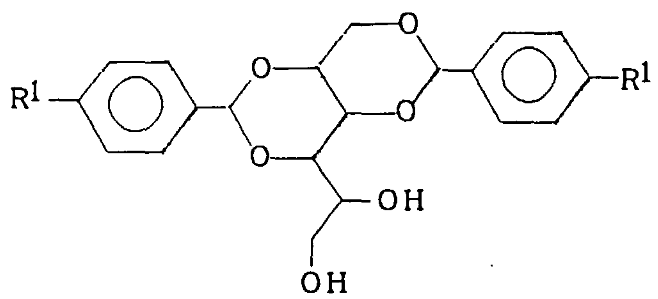

······ (17)

in which the two $R^1$s may be identical with or different from each other and denote each hydrogen atom or a hydrocarbon group having 1 - 10 carbon atoms.

Concrete examples of the nucleating agent based on sorbitol represented by the general formula (17) include 1,3,2,4-dibenzylidene sorbitol, 1,3-benzylidene-2,4-p-methylbenzylidene sorbitol, 1,3-benzylidene-2,4-p-ethylbenzylidene sorbitol, 1,3-p-methylbenzylidene-2,4-benzylidene sorbitol, 1,3-p-ethylbenzylidene-2,4-benzylidene sorbitol, 1,3-p-methylbenzylidene-2,4-p-ethylbenzylidene sorbitol, 1,3-p-ethylbenzylidene-2,4-p-methylbenzylidene sorbitol, 1,3,2,4-di(p-methylbenzylidene) sorbitol, 1,3,2,4-di(p-ethylbenzylidene) sorbitol, 1,3,2,4-di(p-n-propylbenzylidene) sorbitol, 1,3,2,4-di-(p-i-propylbenzylidene) sorbitol, 1,3,2,4-di(p-n-butylbenzylidene) sorbitol, 1,3,2,4-di(p-s-butylbenzylidene) sorbitol, 1,3,2,4-di(p-t-butylbenzylidene) sorbitol, 1,3,2,4-di(2',4'-dimethylbenzylidene) sorbitol, 1,3,2,4-di(p-methoxybenzylidene) sorbitol, 1,3,2,4-di(p-ethoxybenzylidene) sorbitol, 1,3-benzylidene-2,4-p-chlorobenzylidene sorbitol, 1,3-p-chlorobenzylidene-2,4-benzylidene sorbitol, 1,3-p-chlorobenzylidene-2,4-p-methylbenzylidene sorbitol, 1,3-p-chlorobenzylidene-2,4-p-ethylbenzylidene sorbitol, 1,3-p-methylbenzylidene-2,4-p-chlorobenzylidene sorbitol, 1,3-p-ethylbenzylidene-2,4-p-chlorobenzylidene sorbitol, 1,3,2,4-di(p-chlorobenzylidene) sorbitol and mixtures of two or more of them. Among them, 1,3,2,4-dibenzylidene sorbitol, 1,3,2,4-di(p-methylbenzylidene) sorbitol, 1,3,2,4-di(p-ethylbenzylidene) sorbitol, 1,3-p-chlorobenzylidene-2,4-p-methylbenzylidene sorbitol, 1,3,2,4-di(p-chlorobenzylidene) sorbitol and mixtures of two or more of them are preferred.

It is particularly preferable to add 0.1 - 5 parts by weight and, most preferably, to add 0.1 - 2 parts by weight of the nucleating agent (C) based on sorbitol to 100 parts by weight of the component (A).

As the nucleating agent (C), there may be employed, further, metal salts of aromatic carboxylic acids such as aluminum benzoate, aluminum p-tert-butyl benzoate, metal salts of aliphatic carboxylic acids, such as sodium adipate, and metal salts of heterocyclic carboxylic acids, such as sodium thiophenecarboxylate and sodium pyrrolecarboxylate. Also, inorganic nucleating agents, such as talc, may be employed.

For each ingredient to be used according to the present invention, every corresponding substance can be used so long as the material properties of the formed product obtained therewith are within a generally acceptable range, wherein such a substance as bringing about a product in which material properties are all within the favorable range is preferred. However, those substances which bring about material properties for certain parameters within the favorable range while others being out of such favorable range though within a generally acceptable range may also be used favorably.

In the copolymer composition according to the present invention, various additives may, on requirement, also be incorporated, such as other resins, a tackifier, weather resistant agent, heat stabilizer, antistatic agent, antislipping agent, antiblocking agent, lubricant, pigments, dyestuffs, plasticizers, an antiaging agent, hydrochloric acid-absorber and antioxydant. For other resins, polypropylene and elastomers based on styrene (for example, SEBS, SBR and hydrogenated products of them) may be exemplified.

The copolymer composition according to the present invention can be produced by known methods, for example, those given below:

1) A method in which the components (A) and (B) are mechanically blended or melt-kneaded together with other components to be blended on requirement, by means of, for example, an extruder or a kneader.

2) A method in which the components (A), (B) and others to be blended on requirement are dissolved in a suitable

solvent (for example, hydrocarbons, such as hexane, heptane, decane, cylohexane, benzene, toluene and xylene), whereupon the solvent is removed from the resulting solution.

3) A method in which each of the components (A), (B) and others to be blended on requirement is dissolved in a suitable solvent and the resulting solutions are brought together to form a mixed solution, from which the solvent is removed.

4) A method in which the above methods 1) to 3) are incorporated in combination.

The composition containing an α-olefin/aromatic vinyl compound copolymer according to the present invention brings about formed products exhibiting moderate values of extensible elasticity and adhesion and being superior in the transparency, cloud resistance, durability of the cloud resistence and ability for restoring from strain, so that they have better balance between the properties. Moreover, no emission of chlorine occurs upon incineration of the formed articles produced from the copolymer composition according to the present invention, since it has no content of chlorine. Furthermore, films and sheets produced from the copolymer composition according to the present invention will scarcely suffer from occurrence of so-called fish-eye. A susceptibility of a resin to fish-eye formation upon film-forming can be assessed, for example, by counting the number of fish-eyes of diameters of 100 μm or greater appearing on a film produced therefrom within a surface area of 10× 10 cm. The transparency of a film can be evaluated by, for example, determining the haze of the film using a turbidimeter.

While the reason why the composition according to the present invention can bring about formed products which are superior in the fogging resistance is not clear, it is assumed that a certain synergistic action may be brought about between the anti-fogging agent (B) and the copolymer component (A) for facilitating resistance to fogging.

While the composition according to the present invention can be used widely as the material for producing formed products which require an extensible elasticity, ability for adhering onto various surfaces, transparency, fogging resistance and preservativity of the fogging resistance, the composition is especially adapted as the material for sheets, films, pipes and tubes, since it can afford to attain superior performances in the transparency and durable fogging resistance together with a proper extensible elasticity, an increased ability for restoring from strain and reduction of occurrence of fish-eye upon film-forming. Concretely, it can find favorite applications for material of sheets and films for agricultural and industrial uses and for packagings, such as wrapping film, stretchable film and shrinkable film; material of sheets for packaging and so on; material for pipes and tubes (hoses), such as shrinkable tube, pipes for pipelines and tubes for medical uses. Among them, special preference is given for application to agricultural films and packaging films, such as stretchable film and wrapping film, since it attains a superior performances in the transparency, durable fogging resistance and ability for restoring from strain.

The present invention is directed also to formed products produced from the composition containing the copolymer of α-olefin/aromatic vinyl compound described above, such as films, sheets, pipes and tubes (hoses).

Concrete examples of films and sheets include agricultural films, films for industrial uses, films for packaging, such as wrapping film, stretchable film and shrinkable film, and packaging sheets. Concrete examples of tubes and pipes include shrinkable tubes, pipes for pipelines and tubes for medical uses. Among them, preferable applications are agricultural films, wrapping films, stretchable films and shrinkable tubes.

The thickness of the films may usually be in the range of 5 - 150 μm and that of the sheets may usually be in the range of 150 - 3000 μm. These films and sheets can be produced by known forming techniques, for example, inflation molding, T-die extrusion and calendering. The resulting films and sheets are free from bleeding out of the anti-fogging agent (B) and nucleating agent (C) and are superior in the stability of film-forming performance.

The resulting film or sheet can be bought into practical use as monolayer or laminate with other one.

As described above, the composition containing the copolymer of α-olefin/aromatic vinyl compound contains a definite copolymer of α-olefin/aromatic vinyl compound, so that the formed product produced therefrom has balanced properties as exhibiting a proper values of extensible elasticity and ability for adhering onto various surfaces, together with superior performances in the transparency, fogging resistance, preservativity of such fogging resistance and ability for restoring from strain. Due to exclusion of any chlorine content, the composition containing the copolymer of α-olefin/aromatic vinyl compound according to the present invention avoids any environmetally destructive chlorine emission upon incineration of the spent or worn formed product made thereof. The composition according to the present invention does scarcely suffer from the so-called fish-eye formation on the film produced therefrom.

The formed products according to the present invention have, due to the above-described nature of the composition from which the formed products are produced, a better balance between the material properties, such as proper extensible elasticity and ability for adheinrg onto various surfaces together with superior performances in the transparency, fogging resistance with preservation of such fogging resistance and ability for restoring from strain. Especially, films are superior in the transparency, resistance to fogging, preservability of such fogging resistance and ability for restoring from strain, so that they are adapted for agricultural and packaging applications, such as stretchable film and wrapping film.

THE BEST MODE FOR EMBODYING THE INVENTION

Below, the present invention will be described by way of Examples, wherein such Examples should never be understood as restricting the present invention in any respect.

EXAMPLE 1

A one liter reactor made of glass equipped with a condenser and a stirrer, which had been replaced with nitrogen gas sufficiently, was charged with 499.5 ml of toluene, 3.0 ml of 1-hexene and 1.5 ml of styrene and the liquid charge was saturated with ethylene while agitating. Then, the reactor inside temperature was elevated to 35°C and thereto were added 9 mmol of methylaluminoxane (as 10 wt. % toluene solution; obtained from TOSOH AKZO K.K.) and 0.03 mmol (as 0.01 mM toluene solution) of (tert-butylamido)dimethyl(tetramethyl-$\eta^5$-cyclopentadienyl)silanetitanium dichloride. The polymerization was continued for 75 minutes at 40 °C while supplying ethylene continuously thereto at a rate of 100 N liter/hr.

After termination of the polymerization, 250 ml of isobutyl alcohol and 10 ml of aqueous hydrogen chloride solution were added thereto and the mixture was agitated with heating at 80 °C for 30 minutes. The reaction liquor containing isobutyl alcohol was transferred to a separating funnel and was rinsed twice each with 250 ml of water, before oil/water separation was effected. Then, the oil phase was poured into 3 liters of methanol to cause the product polymer to precipitate out. The precipitated polymer product was dried under vacuum at 130 °C for 12 hours, whereby 12.1 g of a copolymer (1) having a 1-hexene content of 2.3 mole % and a styrene content of 1.2 mole % were obtained.

To 100 parts by weight of the so-obtained copolymer (1) of ethylene/α-olefin/aromatic vinyl compound, an anti-fogging agent composed of 2 parts by weight of diglycerin sesquilaurate (HLB = 6.3), 0.3 part by weight of polyoxyethylene(n=5) lauryl ether (HLB = 10.8) and 0.1 part by weight of lauryl diethanolamine (HLB = 6.4), a nucleating asgent composed of 0.4 part by weight of a partial metal salt of rosin (15 mole % of potassium and 15 mole % of sodium) and a stabilizer composed of 0.1 part by weight of calcium stearate, 0.1 part of IRGANOX 1010 (trademark, a product of Ciba Geigy) and 0.1 part by weight of IRGANOX 168 (trademark, a product of Ciba Geigy) were added. The anti-fogging agent had an HLB of 6.9 as the total of the agent. The resulting mixture was melt-kneaded, before being pelletized.

From this pelletized resin composition, a film of a thickness of 40 μm was produced by extruding it through a slit die assembled on a capillary rheometer. For this film, the ability for restoring from a stress by finger press and the fogging resistance were tested. The material properties of the copolymer (1) of ethylene/α-olefin/aromatic vinyl compound are recited in Table 1 and the results of the test of the film are given in Table 2.

EXAMPLES 2 to 4

Copolymers (2) to (4) of ethylene/α-olefin/aromatic vinyl compound, in which the content or the sort of the α-olefin and of the aromatic vinyl compound was changed, were produced in the same manner as in EXAMPLE 1. Using each of these copolymers, film samples were produced in the same manner as in EXAMPLE 1. The material properties of the copolymers (2) to (4) are recited in Table 1 and the test results for the films are given in Table 2.

EXAMPLE 5

A copolymer (5) of ethylene/aromatic vinyl compound was produced in the same manner as in EXAMPLE 1, except that 1-hexene was not incorporated. Using this copolymer (5), a film sample was prepared in the same manner as in EXAMPLE 1. The material properties of the copolymer (5) are recited in Table 1 and the test results for the film are given in Table 2.

EXAMPLE 6

The procedures of EXAMPLE 1 were followed except that 0.2 part by weight of 1,2,3,4-di(p-methylbenzylidene) sorbitol [GELOL MD (trademark) of Shin Nippon Yuka K.K.] was used as the nucleating agent instead of the partial metal salt of rosin. The material properties of the resulting film are recited in Table 2.

EXAMPLE 7

The procedures of EXAMPLE 1 were followed except that the copolymer (3) as given in Table 1 was employed in place of the ethylene/α-olefin copolymer (1) and that 0.2 part by weight of 1,2,3,4-di(p-methylbenzylidene) sorbitol [GELOL MD (trademark) of Shin Nippon Yuka K.K.] was used as the nucleating agent instead of the partial metal salt of rosin. The material properties of the resulting film are recited in Table 2.

COMPARATIVE EXAMPLE 1

A copolymer (6) of ethylene/α-olefin was produced in the same manner as in EXAMPLE 1, except that the aromatic vinyl compound was not incorporated. Using this copolymer (6), a film sample was prepared in the same manner as in EXAMPLE 1. The material properties of the copolymer (6) are recited in Table 1 and the test results for the film are given in Table 3.

COMPARATIVE EXAMPLE 2

A film sample was produed in the same manner as in EXAMPLE 1, except that the anti-fogging agent was not incorporated. The test results for the film are given in Table 3.

Table 1

| Copolymer | (1) | (2) | (3) |
|---|---|---|---|
| α-olefin 1) | 1-hexene (2.3 mole %) | 1-hexene (4.5 mole %) | 1-butene (4.1 mole %) |
| Arom. vinyl compound 2) | styrene (1.2 mole %) | styrene (1.1 mole %) | styrene (0.8 mole %) |
| MFR (g/10min.) | 4.4 | 4.6 | 3.2 |
| Tm (°C) 3) | 108 | 86 | 95 |
| Copolymer | (4) | (5) | (6) |
| α-olefin 1) | 1-hexene (3.8 mole %) | - | 1-hexene (4.8 mole %) |
| Arom. vinyl compound 2) | 4-MS 4) (0.3 mole%) | Styrene (4.8 mole %) | - |
| MFR (g/10min.) | 7.7 | 5.2 | 2.8 |
| Tm (°C) 3) | 102 | 90 | 98 |

Notes:
1): α-olefin other than ethylene; the content in the copolymer determined by $^{13}C$ NMR is given in the parentheses.
2): The content in the copolymer determined by $^{13}C$ NMR is given in the parentheses.
3): Temperature at the maximum peak in the endothermic curve observed by differential scanning calorimeter.
4): 4-MS = 4-methoxystyrene.

Table 2

| | EXAMPLES | | | | | | |
|---|---|---|---|---|---|---|---|
| | 1 | 2 | 3 | 4 | 5 | 6 | 7 |
| Copolymer | (1) | (2) | (3) | (4) | (5) | (1) | (3) |
| Finger Press Restor. 1) | ○ | ○ | ○ | ○ | ○ | ○ | ○ |
| Fogging resistance 2) | | | | | | | |
| Neat | ○ | ○ | ○ | ○ | ○ | ○ | ○ |
| After moist. | ○ | ○ | ○ | ○ | ○ | ○ | ○ |
| Remaining strain (%)3) | 50 | 45 | 54 | 65 | 35 | 51 | 55 |

Notes:
1): Restorability from finger press: Film is placed over a cup and is pressed lightly at its cup edge with finger. The evaluation is made by the following criterion:
○ : No trace of finger press is recognizable.
△ : A trace of finger press is recognized.
X : Clear mark of finger press is seen.
2): Neat fogging resistance is assessed in such a manner that a 180 ml cup containing 50 ml of warm water of 70 °C is covered with the film and the so-covered cup is stored in a refrigerator at 5 °C for one hour, whereupon the fogging is assessed by the following criterion:
○ : No fogging on film occurs and the cup inside can be seen clearly through the film.
X : Film is cloudy and the cup inside is scarcely seen.
Fogging resistance after a film-moistening treatment is assessed by immersing the film in water at 25°C for 24 hours and drying the film taken out of the water, whereupon the fogging is assessed in the manner as given above.
3) Remaining strain is assessed in such a manner that a rectangular test sheet of 1 cm width and 10 cm length is cut out from a pressed sheet of a thickness of 1 mm, on which a gauge line of 4 cm is marked and the test sheet is stretched up to 100 % elongation under a stress and this stretched state is maintained for 10 minutes before relieving the stress, whereupon percent proportion of strain remaining after one hour is observed.

Table 3

| | COMPAR. EXAMPLES | |
|---|---|---|
| | 1 | 2 |
| Copolymer | (6) | (1) |
| Finger Press Restor. 1) | △ | ○ |
| Fogging resistance 2) | | |
| Neat | ○ | X |
| After moist. | X | X |
| Remaining strain (%)3) | 87 | 50 |

Notes:
1): Restorability from finger press: Film is placed over a cup and is pressed lightly at its cup edge with finger. The evaluation is made by the following criterion:
○ : No trace of finger press is recognizable.
△ : A trace of finger press is recognized.
X : Clear mark of finger press is seen.
2): Neat fogging resistance is assessed in such a manner that a 180 ml cup containing 50 ml of warm water of 70 °C is covered with the film and the so-covered cup is stored in a refrigerator at 5 °C for one hour, whereupon the fogging is assessed by the following criterion:
○ : No fogging on film occurs and the cup inside can be seen clearly through the film.
X : Film is cloudy and the cup inside is scarcely seen.
Fogging resistance after a film-moistening treatment is assessed by immersing the film in water at 25°C for 24 hours and drying the film taken out of the water, whereupon the fogging is assessed in the manner as given above.
3) Remaining strain is assessed in such a manner that a rectangular test sheet of 1 cm width and 10 cm length is cut out from a pressed sheet of a thickness of 1 mm, on which a gauge line of 4 cm is marked and the test sheet is stretched up to 100 % elongation under a stress and this stretched state is maintained for 10 minutes before relieving the stress, whereupon percent proportion of strain remaining after one hour is observed.

INDUSTRIAL APPLICABILITY

As detailed above, the composition containing the copolymer of α-olefin/aromatic vinyl compound according to the present invention are useful as the material of films and sheets or of pipes and tubes. The films and sheets produced from the composition according to the present invention can be utilized favorably for agricultural, industrial and packaging purposes. Pipes and tubes for pipelines and for medical uses produced from the composition according to the present invention exhibit superior performances due to their transparency, fogging resistance etc.

## Claims

**1.** A composition of an α-olefin/aromatic vinyl compound copolymer, comprising

(A) a copolymer of an α-olefin and an aromatic vinyl compound composed of 99.95 - 70 mole % of the structural unit derived from the α-olefin and 0.05 - 30 mole % of the structural unit derived from the aromatic vinyl compound and
(B) an anti-fogging agent,

wherein the content of the cloud inhibitor (B) is in the range from 0.5 to 10 parts by weight per 100 parts by weight of the α-olefin/aromatic vinyl compound copolymer (A).

2. A composition as claimed in Claim 1, wherein the α-olefin/aromatic vinyl compound copolymer (A) is a copolymer of ethylene, an α-olefin having 3 - 20 carbon atoms and an aromatic vinyl compound composed of 99.95 - 40 mole % of the structural unit derived from ethylene, 0 - 30 mole % of the structural unit derived from the α-olefin having 3 - 20 carbon atoms and 0.05 - 30 mole % of the structural unit derived from the aromatic vinyl compound.

3. A composition as claimed in Claim 2, wherein the total content of the structural unit derived from the α-olefin having 3 - 20 carbon atoms and the structural unit derived from the aromatic vinyl compound in the α-olefin/aromatic vinyl compound copolymer (A) amounts to 0.05 - 30 mole %.

4. A composition as claimed in Claim 2 or 3, wherein the α-olefin having 3 - 20 carbon atoms is 1-butene, 1-pentene, 1-hexene or 1-octene.

5. A composition as claimed in either one of Claims 1 to 4, wherein the α-olefin/aromatic vinyl compound copolymer (A) has a melt flow rate (MFR) at 190 °C under a load of 2.16 kg in the range from 0.05 to 100 g/10 min. and the temperature (Tm) at the maximum peak of the endothermic curve obtained by a differential scanning calorimeter in the range from 70 to 125°C.

6. A composition as claimed in either one of Claims 1 to 5, wherein the anti-fogging agent (B) is a non-ionic surfactant or a mixture of non-ionic surfactants.

7. A composition as claimed in Claim 6, wherein the non-ionic surfactant or the mixture of non-ionic surfactants has an HLB of 5 - 10.

8. A composition as claimed in either one of Claims 1 to 7, wherein the composition containing 0.5 - 10 parts by weight of the anti-fogging agent (B) per 100 parts by weight of the α-olefin/aromatic vinyl compound copolymer (A) contains 0.01 - 10 parts by weight of a nucleating agent (C).

9. A formed product produced from a composition as claimed in either one of Claims 1 to 8.

10. A formed product as claimed in Claim 9, wherein the formed product is a film, sheet, pipe or tube.

## INTERNATIONAL SEARCH REPORT

International application No.
PCT/JP97/03209

**A. CLASSIFICATION OF SUBJECT MATTER**
Int. $Cl^6$ C08L23/02, 25/08, C08K5/10

According to International Patent Classification (IPC) or to both national classification and IPC

**B. FIELDS SEARCHED**

Minimum documentation searched (classification system followed by classification symbols)
Int. $Cl^6$ C08L23/02-23/24, 25/08, C08K5/00, 5/10

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 51-150556, A (Mitsubishi Chemical Industries Ltd.), December 24, 1976 (24. 12. 76), Claims; page 2, lower left column, line 10 to lower right column, line 8 (Family: none) | 1 - 10 |
| Y | JP, 58-11511, A (Mitsubishi Chemical Industries Ltd.), January 22, 1983 (22. 01. 83), Claims; page 2, upper left column, lines 6 to 11 (Family: none) | 1 - 10 |
| Y | JP, 8-134140, A (Tosoh Corp.), May 28, 1996 (28. 05. 96), Claims; Par. No. (0054) (Family: none) | 1 - 10 |
| A | JP, 48-8385, A (Kaneka Corp.), February 2, 1973 (02. 02. 73), Claims; page 2, upper left column, lines 8 to 14 (Family: none) | 1 - 10 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| December 5, 1997 (05. 12. 97) | December 16, 1997 (16. 12. 97) |
| Name and mailing address of the ISA/ Japanese Patent Office | Authorized officer |
| Facsimile No. | Telephone No. |

Form PCT/ISA/210 (second sheet) (July 1992)